# EUROPEAN PATENT APPLICATION

(11) **EP 3 957 511 A1**
(43) Date of publication of application: **23.02.2022**
(21) Application number: 21190623.5
(22) Date of filing: 10.08.2021
(51) Int. Cl.: B60L 3/00, B60L 50/60, B60L 50/64

(54) **RAILWAY VEHICLE INCLUDING AN ENERGY STORAGE SYSTEM**

(30) Priority: 14.08.2020 GB 202012746
(71) Applicant: HITACHI RAIL LIMITED, London Greater London EC4M 7AW (GB)
(72) Inventor: DAUTEL, Christopher, London, EC1N 2PB (GB); SCRACE, Syd, London, EC1N 2PB (GB)
(74) Representative: Mewburn Ellis LLP

(57) **Abstract**

A railway vehicle includes an energy storage system comprising rechargeable batteries for providing electrical power to one or more traction motors of a train drive system, and at least one casing forming a chamber in which the batteries are sealingly housed. The railway vehicle further includes a passenger compartment. The railway vehicle further includes an exhaust system for collection and discharge of combustion fumes generated by accidental combustion of the rechargeable batteries. The exhaust system provides a collection duct which opens to the chamber for collection of combustion fumes. The exhaust system further provides a discharge duct which fluidly communicates with the collection duct to receive the combustion fumes therefrom. The discharge duct is configured to discharge the received combustion fumes to the outside of the vehicle at an outlet port which is located to direct the discharged combustion fumes away from the passenger compartment. The exhaust system is configured to provide: (i) a closed operational state which in normal usage maintains airtight sealing of the batteries in the chamber and (ii) an open operational state which in the event of combustion of the rechargeable batteries enables flow of combustion fumes from the chamber through the exhaust system to the outlet port.

## Description

### Field of the disclosure

The present disclosure relates to a railway vehicle including an energy storage system.

### Background

Conventional drive systems for railway vehicles include hybrid systems in which primary power can be selectably drawn from an overhead line or a generator powered by a diesel engine. In such drive systems it is known to include on-board energy storage systems, such as lithium ion batteries, or lead batteries, connection to the energy storage system being between the primary power source and the traction transmission system driving the wheels. Surplus energy from the primary power source, or energy derived from regenerative braking, can be stored in the energy storage system. During acceleration, this stored energy is directed to the transmission system, boosting that available from the primary power source.

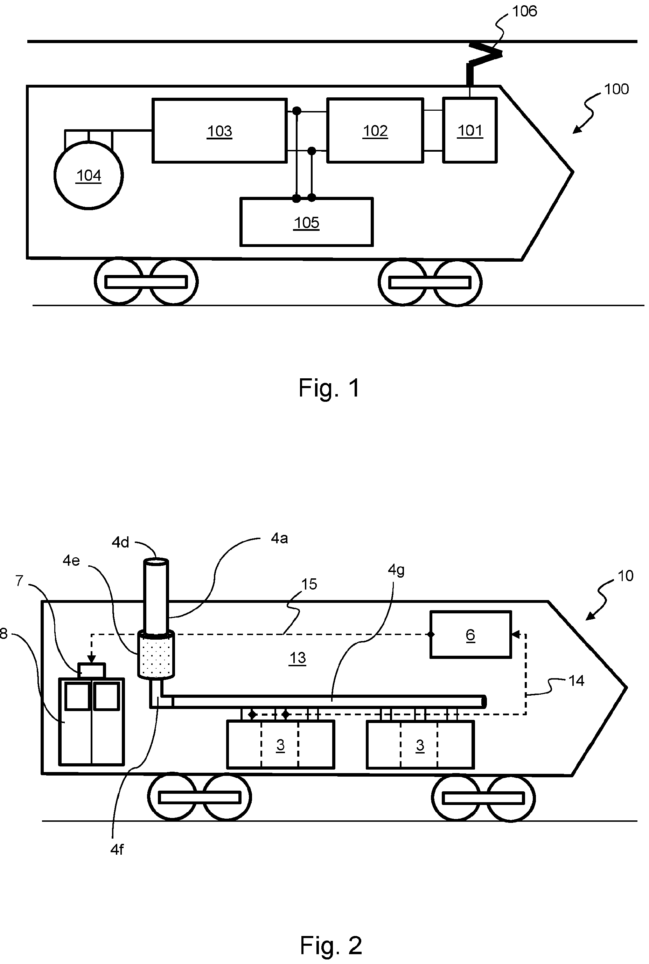

Figure 1 shows schematically a conventional railway vehicle 100 with a hybrid drive system comprising a main transformer 101 which steps down a primary AC power supplied via a pantograph 106 from an overhead line, and supplies the stepped down AC power to a line converter 102. A DC link then joins the line converter 102 to a line inverter 103 which supplies three phase AC power to drive traction motor or motors 104. A battery-based energy storage system 105 connected to the DC link stores surplus power, and releases that power as needed.

Less common are railway vehicles carrying traction batteries, where the batteries are the prime mover for the vehicle. One example, is the two-car BEC819 series BEMU battery/electric train operated since 2016 by JR Kyushu on part of the Chikuho̅ Main Line. This train has rechargeable traction batteries, but can also be powered via overhead AC power line. Another example is the Cityjet eco train operated by Austrian Federal Railways. This train is also equipped to operate with rechargeable traction batteries and overhead lines.

In both these examples, the trains are used for "gap-filling" operation, in which the trains are used on both electrified and non-electrified track sections, allowing their batteries to be recharged by overhead pickup when the trains are travelling on the electrified sections. However, with improvements in energy storage capability enabling longer distances to be travelled on non-electrified track sections, there are growing possibilities for using on-board energy storage systems as the primary power source for traction.

Indeed, improvements in energy storage capability also allow larger batteries to be used in hybrid systems where the batteries are a primary power source on an equal footing with e.g. an overhead line, a generator powered by a diesel engine, or fuel cells.

Safety is a key factor for acceptance of on-board energy storage. In the event of an incident associated with a battery-based on-board energy storage system, heat can be generated by the system, which could potentially cause ignition of battery cells due to the chemical reaction which generates the electrical power. Such a fire has the potential to produce significantly more combustion products than a corresponding fire in a road vehicle because railway vehicles typically have larger energy storage systems than road vehicles.

EP A 3373362 proposes a housing for a battery unit intended to meet ventilation and fire protection requirements. From EP A 3530324 it is known to provide battery cells in a housing with a fire extinguishment measure fixed at an inner surface of the housing.

### Summary

It would be desirable to provide a railway vehicle which further eliminates or mitigates the risk to humans of battery cell fires, and in particular suitably manages any toxic smoke and fumes generated by such fire.

Thus in a first aspect, the present disclosure provides a railway vehicle including:
an energy storage system comprising rechargeable batteries for providing electrical power to one or more traction motors of a train drive system, and at least one casing forming a chamber in which the batteries are sealingly housed,
a passenger compartment, and
an exhaust system for collection and discharge of combustion fumes generated by accidental combustion of the rechargeable batteries, the exhaust system providing a collection duct which opens to the chamber for collection of combustion fumes therefrom, and the exhaust system further providing a discharge duct which fluidly communicates with the collection duct to receive the combustion fumes therefrom, the discharge duct being configured to discharge the received combustion fumes to the outside of the vehicle at an outlet port which is located to direct the discharged combustion fumes away from the passenger compartment; and
wherein the exhaust system is configured to provide: (i) a closed operational state which in normal usage maintains airtight sealing of the batteries in the chamber and (ii) an open operational state which in the event of combustion of the rechargeable batteries enables flow of combustion fumes from the chamber through the exhaust system to the outlet port.

Advantageously, the exhaust system thus allows combustion fumes (i.e. gas and smoke) to be released at a location which is safely away from passengers. Moreover, the exhaust system, by providing a closed operational state which maintains the airtight sealing of the batteries in the chamber, not only limits initial spread of combustion products from the chamber, but can also allow a pressure to build in the chamber before the exhaust system transitions to the open operational state. This pressure can be used to drive heavier-than-air particulate combustion products out of the chamber with the combustion fumes, where they can be trapped by a suitably placed filter, e.g. located in the discharge duct.

The railway vehicle may have any one or, to the extent that they are compatible, any combination of the following optional features.

The collection duct is typically substantially vertical.

Conveniently, the exhaust system may include a vent which is movable between a closed position which maintains the sealing of the batteries in the chamber, and an open position which enables gas flow from the chamber through the exhaust system to the outlet port, i.e. the vent provides the closed and open operational states of the exhaust system. For example, the vent may be a unidirectional pressure relief valve which automatically moves from the closed to the open position when a predetermined threshold pressure is reached in the chamber in excess of atmospheric pressure. The threshold pressure can be set at a level which avoids unintended opening of the valve. The predetermined threshold pressure may be a gauge pressure of more than one atmosphere and/or less than five atmospheres. Pressures in this range are generally sufficient to expel heavier-than-air particulates from the chamber, but not so high that they may cause explosions. For high reliability, preferably the valve is a purely mechanical valve.

Although over-pressure in the chamber can be used to drive the combustion fumes from the chamber through the exhaust system to the outlet port, another option is for the exhaust system to include a fan to drive the flow of combustion fumes. Indeed, the fan can supplement such over-pressure.

The energy storage system may comprise plural casings forming respective chambers in which the batteries are sealingly housed. The exhaust system may then provide plural collection ducts which each communicate with the discharge duct and which open to respective of the chambers. For example the casings may distributed along the length of the railway vehicle. Additionally or alternatively, the or each casing may have one or more internal dividers which divide that casing into plural sub-chambers which are mutually sealed from each other. The exhaust system may then provide plural collection ducts which each communicate with the discharge duct and which open to respective of the sub-chambers. The plural chambers and/or plural sub-chambers can inhibit the spread of fire in larger battery systems.

Conveniently, when the exhaust system provides plural collection ducts, the exhaust system may also provide a manifold which receives the combustion fumes from the collection ducts and conveys the combustion fumes to the discharge duct, i.e. the manifold provides the fluid communication between the collection ducts and the discharge duct. The manifold may be joined to the discharge duct by bellows. This can accommodate relative movement between the manifold and the discharge duct, reducing stresses in these components. By providing a manifold, the structure of the discharge duct can be simplified.

When the exhaust system provides plural collection ducts, the exhaust system preferably includes plural of the vent, each vent being movable between a closed position and an open position as discussed above, and each vent being located at a respective one of the collection ducts.

The exhaust system may include a filter configured to remove particulates carried by the combustion fumes. Conveniently, this filter can be located in the discharge duct or manifold. When there are plural collection ducts these can then be serviced by a single filter. Preferably the filter is removably replaceable.

Conveniently, the energy storage system may be located beneath the passenger compartment, although other options are possible such as location in a storage cubicle at the level of the passenger compartment. As previously mentioned, the outlet port is located to direct the discharged combustion fumes away from the passenger compartment. To this end, the outlet port may be mounted on a roof, an underframe or at a mid-height position of the vehicle. However, conveniently, the outlet port may be located above a ceiling level of the passenger compartment, such as, for example, a roof mounting. The discharge duct can be formed as a vertical extending chimney, for example extending from beneath floor level of the passenger compartment to above ceiling level.

Preferably, the outlet port is located at an end of the railway vehicle. When a pair of the vehicles are coupled together as adjacent vehicles in a train set, the adjacent vehicles may then be arranged such that their outlet ports are proximal each other. If an external fume hood is provided, for example at a station, to collect discharged combustion fumes from the train set in the event of combustion of the rechargeable batteries, the fume hood can more easily service both outlet ports. However, this does not exclude that the outlet can be located midway between the ends of the vehicle.

The railway vehicle may further include a vehicle control system, wherein the exhaust system is configured to communicate its operational state to the vehicle control system, and, the vehicle control system is configured such that, when the exhaust system enters its open operational state, the vehicle control system performs one or more of (a) issuing a driver alert signal, (b) commanding the closure of one or more air intakes of a ventilation system of the passenger compartment, and (c) commanding the closure of one or more external passenger doors of the passenger compartment. However, such a vehicle control system may be located externally of the railway vehicle, for example in a second (e.g. lead) railway vehicle of a train set which includes the first railway vehicle. Thus, in a second aspect, the present disclosure provides a combination of the railway vehicle according to the first aspect, and a vehicle control system, wherein the exhaust system is configured to communicate its operational state to the vehicle control system, and, the vehicle control system is configured such that, when the exhaust system enters its open operational state, the vehicle control system performs one or more of (a) issuing a driver alert signal, (b) commanding the closure of one or more air intakes of a ventilation system of the passenger compartment, and (c) commanding the closure of one or more external passenger doors of the passenger compartment. By means of the vehicle control system, the safety of passengers and train staff can be further enhanced, the alert assisting the driver to take appropriate safety actions and the closure(s) further helping to prevent discharged combustion fumes from reaching the passengers. The one or more air vents are typically vents adjacent the outlet port.

Likewise, the external passenger doors are typically doors adjacent the outlet port. The vehicle control system may be a train control and management system (TCMS).

In a third aspect, the present disclosure provides a train set comprising plural railway vehicles according to the first aspect. The train set may have a vehicle control system (such as the one discussed above) which serves the railway vehicles of the train set. Conveniently, the vehicle control system can be located in a lead vehicle of the train set.

As discussed above in respect of the first aspect, the energy storage system of the railway vehicle comprises rechargeable batteries for providing electrical power to one or more traction motors of a train drive system. In the train set of the third aspect, these traction motors may be located as needed (e.g. at selected driven wheel axles of the vehicles) to distribute weight along the train set and to provide desired performance characteristics. Likewise, other elements of the drive system may be distributed among the vehicles of the train set according to considerations such as space availability and weight distribution. Such elements may include electrical converters and, in the case of a hybrid drive system, components of one or more other prime movers. As an example, these components may include one or more pantographs, and associated main transformers and converters.

When the railway vehicles of the train set have their respective outlet ports located at ends of the vehicles, one or more pairs of the vehicles may be coupled together in the train set as adjacent vehicles having their outlet ports proximal each other.

The rechargeable batteries may be the sole primary power source for the train set, or they may be part of a hybrid system e.g. on an equal footing with other primary power sources such an overhead line, a generator powered by a diesel engine, or fuel cells.

### Brief description of the drawings

Embodiments of the present disclosure will now be described by way of example with reference to the accompanying drawings in which:
Figure 1 shows schematically a conventional railway vehicle with a hybrid drive system;
Figure 2 shows schematically a railway vehicle having a drive system including an energy storage system;
Figure 3 shows schematically exploded detail of part of the energy storage system of the railway vehicle of Figure 2; and
Figure 4 shows schematically a pair of coupled railway vehicles forming part of a train set.

### Detailed description

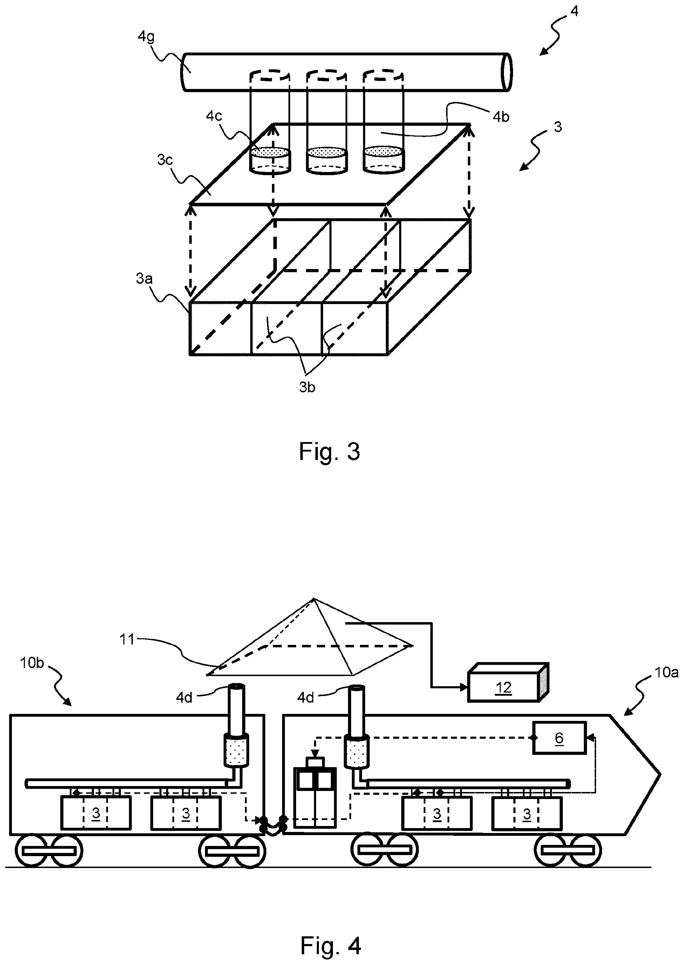

Figure 2 shows schematically a railway vehicle 10 having a drive system including a battery-based energy storage system, and Figure 3 shows schematically exploded detail of part of the energy storage system.

The energy storage system includes plural casings 3 distributed along the length of the vehicle and forming respective chambers. Each casing 3 has a bottom portion 3a forming a base and walls, and a lid portion 3c. The lid portion is removable to allow rechargeable battery cells to be installed in the chamber, and fits air-tightly to the top of the walls to seal the battery cells in the chamber. Internal dividers 3b divide the chamber formed by the casing into sub-chambers which are mutually sealed from each other. The batteries may be, for example, lithium titanate (LTO) or lithium nickel manganese cobalt oxide (NMC) batteries.

Other parts of the drive system of the railway vehicle are not shown in Figure 2. However, one option is for the energy storage system to be the sole prime mover of the vehicle, for example providing DC power to an inverter which in turn supplies three phase AC power to a traction motor or motors. Another option is for the energy storage system to be part of a hybrid system, for example like that shown in Figure 1. Other parts of the drive system can be installed in the railway vehicle, or they may be installed in other vehicles with which the first vehicle forms a train set.

The energy storage system is installed beneath a floor of the railway vehicle. Above this floor, the vehicle has a passenger compartment occupying the space generally indicated 13 in Figure 2. One or more external doors 8 in the side of the vehicle allow passengers to enter and exit the passenger compartment.

The railway vehicle has an exhaust system 4 for collection and discharge of combustion fumes (gas and smoke) generated by accidental combustion of the batteries. The exhaust system is configured so that the combustion fumes can be released at a location which is safely away from passengers.

In more detail, the exhaust system 4 includes plural collection ducts 4b respectively opening to and extending upward from the sub-chambers of the casings 3 to arrive at a manifold 4g. This extends in the length direction of the railway vehicle and also joins to the base of a discharge duct 4a, which typically extends vertically from the manifold to take the form of a chimney. The discharge duct terminates at an outlet port 4d above the ceiling of the passenger compartment on a roof of the vehicle. The connection of the manifold to the discharge duct can conveniently be made by bellows 4f in order to accommodate relative movement between parts of the exhaust system. A replaceable filter 4e can be installed in the discharge duct, or the manifold, to trap particulates carried by combustion fumes arriving in the exhaust system from any of the collection ducts.

The exhaust system 4 provides (i) a closed operational state which in normal usage maintains airtight sealing of the batteries in the chambers of the casings 3 and (ii) an open operational state which in the event of combustion of the batteries enables flow of combustion fumes from the chambers through the exhaust system to the outlet port 4d. This is achieved by providing each collection duct 4b with a respective vent 4c. These vents can conveniently be unidirectional pressure release valves which are closed in normal usage preventing flow along the collection ducts, but which automatically open when a predetermined threshold pressure is reached in their respective sub-chambers in excess of atmospheric pressure. For reliability, the valves may be of purely mechanical type.

If a fire starts in the battery cells of a given sub-chamber, its spread is inhibited by the internal dividers 3b and the casings 3, and by virtue of the sub-chamber being sealed by the closed state of its valve 4c. This sealing allows combustion gas released by the fire to increase the pressure in the sub-chamber until it eventually exceeds a threshold which causes the valve to open. The released pressure drives the combustion fumes out of the sub-chamber and along the collection duct 4b, manifold 4g and discharge duct 4a to be expelled at the outlet port 4d, safely away from passengers in the passenger compartment. The pressure also carries particulate combustion products, including heavier-than-air particulates, out of the sub-chamber with the combustion fumes, where they can be trapped in the filter 4e. The valve may typically be configured such that it opens at a threshold gauge pressure in the sub-chamber of from one to five atmospheres.

Although not shown in Figures 2 and 3, another option for driving the combustion fumes and particulates through the exhaust system is to install a fan in the manifold 4g or the discharge duct 4a. Operation of the fan can be triggered by opening of the valves 4c.

The railway vehicle has a TCMS 6 which controls and manages the drive system, as well as other operational systems of the vehicle. The valves 4c communicate with the TCMS via a monitoring line 14 which conveys the operational state (i.e. closed or open) of the valves to the TCMS. When the TCMS receives a notification that any of the valves is open it can provide an alert signal to the driver and is also able to take appropriate actions. For example, via control lines 15 the TCMS can command passenger actuators 7 to keep any passenger doors 8 in the vicinity of the outlet port 4d shut, and thereby prevent passengers inhaling exhaust fumes from the port. As another example, the TCMS can command the closure of any HVAC (heating, ventilation and air-conditioning) ports in the proximity of the outlet port 4d.

As shown in Figure 2, the outlet port 4d can be located at an end of the railway vehicle. This has advantages when the vehicle is part of train set. Figure 4 shows schematically a pair of coupled railway vehicles 10a, 10b forming part of such a train set, each of the coupled vehicles having a respective energy storage system and a respective exhaust system. The outlet ports of both vehicles are at respective ends, and the vehicle are coupled so that their outlet ports proximal each other. If the external track infrastructure has a facility to collect exhaust fumes, such as a fume hood 11 and storage or treatment facility 12 for exhaust fumes collected by the hood, then by grouping the outlet ports together it is easier to for a single such hood to service two ports.

In the train set of Figure 4, the TCMS 6 receives the operational state of the valves 4c of all the vehicles in the train set having respective energy storage systems, and further controls equipment items such as passenger doors 8 and HVAC ports in any of the vehicles as needed.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein.

## Claims

1. A railway vehicle (10) including:
an energy storage system comprising rechargeable batteries for providing electrical power to one or more traction motors of a train drive system, and at least one casing (3) forming a chamber in which the batteries are sealingly housed,
a passenger compartment (13), and
an exhaust system (4) for collection and discharge of combustion fumes generated by accidental combustion of the rechargeable batteries, the exhaust system providing a collection duct (4b) which opens to the chamber for collection of combustion fumes therefrom, and the exhaust system further providing a discharge duct (4a) which fluidly communicates with the collection duct to receive the combustion fumes therefrom, the discharge duct being configured to discharge the received combustion fumes to the outside of the vehicle at an outlet port (4d) which is located to direct the discharged combustion fumes away from the passenger compartment; and
wherein the exhaust system is configured to provide: (i) a closed operational state which in normal usage maintains airtight sealing of the batteries in the chamber and (ii) an open operational state which in the event of combustion of the rechargeable batteries enables flow of combustion fumes from the chamber through the exhaust system to the outlet port.

2. The railway vehicle according to claim 1, wherein the exhaust system includes a vent (4c) which is movable between a closed position which maintains the sealing of the batteries in the chamber, and an open position which enables gas flow from the chamber through the exhaust system to the outlet port.

3. The railway vehicle according to claim 2, wherein the vent is a pressure relief valve which automatically moves from the closed to the open position when a predetermined threshold pressure is reached in the chamber in excess of atmospheric pressure.

4. The railway vehicle according to any one of the previous claims, wherein the exhaust system includes a fan to drive flow of combustion fumes from the chamber through the exhaust system to the outlet port.

5. The railway vehicle according to any one of the previous claims, wherein the energy storage system comprises plural casings forming respective chambers in which the batteries are sealingly housed, and the exhaust system provides plural collection ducts which each communicate with the discharge duct and which open to respective of the chambers.

6. The railway vehicle according to any one of the previous claims, wherein the or each casing has one or more internal dividers (3b) which divide that casing into plural sub-chambers which are mutually sealed from each other, and the exhaust system provides plural collection ducts which each communicate with the discharge duct and which open to respective of the sub-chambers.

7. The railway vehicle according to claim 5 or 6, wherein the exhaust system provides a manifold (4g) which receives the combustion fumes from the collection ducts and conveys the combustion fumes to the discharge duct.

8. The railway vehicle according to any one of claims 5 to 7, as dependent on claim 2 or 3, wherein the exhaust system includes plural of the vents, each vent being movable between a closed position and an open position, and each vent being located at a respective one of the collection ducts.

9. The railway vehicle according to any one of the previous claims, wherein the exhaust system includes a filter (4e) configured to remove particulates carried by the combustion fumes.

10. The railway vehicle according to claim 9, wherein the filter is located in the discharge duct or the manifold.

11. The railway vehicle according to any one of the previous claims, wherein the energy storage system is located beneath the passenger compartment.

12. The railway vehicle according to any one of the previous claims, wherein the outlet port is located above a ceiling level of the passenger compartment.

13. The railway vehicle according to any one of the previous claims, wherein the outlet port is located at an end of the railway vehicle.

14. A combination of the railway vehicle according to any one of the previous claims, and a vehicle control system, wherein the exhaust system is configured to communicate its operational state to the vehicle control system, and, the vehicle control system is configured such that, when the exhaust system enters its open operational state, the vehicle control system performs one or more of (a) issuing a driver alert signal, (b) commanding the closure of one or more air intakes of a ventilation system of the passenger compartment, and (c) commanding the closure of one or more external passenger doors of the passenger compartment.

15. A train set comprising plural of the railway vehicles according to any one of claims 1 to 13.

16. The train set according to claim 15, as dependent on claim 13, one or more pairs of the railway vehicles being coupled together in the train set as adjacent vehicles having their outlet ports proximal each other.
